# EUROPÄISCHE PATENTSCHRIFT

(11) **EP 3 986 644 B1**
(45) Veröffentlichungstag und Bekanntmachung des Hinweises auf die Patenterteilung: **07.06.2023**
(21) Anmeldenummer: 20731467.5
(22) Anmeldetag: 08.06.2020
(51) Int. Cl.: B22F 10/28, B22F 10/32, B22F 12/70, B29C 64/245, B33Y 40/00, F16J 15/16, F16J 15/40, B33Y 30/00

(54) **DICHTUNGSSYSTEM**
SEAL SYSTEM
SYSTÈME DE JOINTS D'ÉTANCHÉITÉ

(30) Priorität: 24.06.2019 DE 202019103479 U
(43) Veröffentlichungstag der Anmeldung: 27.04.2022
(73) Patentinhaber: SLM Solutions Group AG, 23560 Lübeck (DE)
(72) Erfinder: GIESER, Eduard, 23560 Luebeck (DE); MUELLER, Christian, 23560 Luebeck (DE); KOPSCHINSKI, Daniel, 23560 Luebeck (DE)
(74) Vertreter: Mooser, Sebastian Thomas
(86) Internationale Anmeldenummer: PCT/EP2020/065836
(87) Internationale Veröffentlichungsnummer: WO 2020/259995

(56) Entgegenhaltungen:
- CN-U- 208 303 891
- DE-A1-102011 112 581
- DE-A1-102017 118 065
- DE-U1-202019 001 440

## Beschreibung

Die Erfindung betrifft ein Dichtungssystem für eine Anlage zur Herstellung eines dreidimensionalen Werkstücks mittels eines generativen Schichtbauverfahrens, ein System umfassend ein Dichtungssystem und eine mit dem Dichtungssystem gekoppelte nach oben und/oder unten fahrbare Plattenanordnung, und eine Anlage zur Herstellung eines dreidimensionalen Werkstücks mittels eines generativen Schichtbauverfahrens.

Bei generativen Schichtbauverfahren zum Herstellen dreidimensionaler Werkstücke, insbesondere dem sogenannten Pulverbettschmelzen, wird ein Rohstoffpulver schichtweise auf einen Träger aufgetragen und in Abhängigkeit der gewünschten Geometrie des zu erstellenden Werkstücks ortselektiv mit elektromagnetischer Strahlung, beispielsweise Laserstrahlung, oder mit Teilchenstrahlung beaufschlagt. Die in die Pulverschicht eindringende Strahlung bewirkt eine Erwärmung und folglich eine Verschmelzung oder Versinterung der Rohstoffpulverpartikel. Anschließend werden sukzessiv weitere Rohstoffpulverschichten auf die bereits strahlungsbehandelte Schicht auf dem Träger aufgebracht, bis das Werkstück die gewünschte Form und Größe hat. Das Rohstoffpulver kann Keramik-, Metall- oder Kunststoffmaterialien, aber auch Materialgemische hieraus umfassen. Generative Schichtbauverfahren und insbesondere Pulverbettschmelzverfahren können beispielsweise zur Herstellung von Prototypen, Werkzeugen, Ersatzteilen oder medizinischen Prothesen, wie zum Beispiel zahnärztlichen oder orthopädischen Prothesen, sowie zur Reparatur von Bauteilen anhand von CAD-Daten eingesetzt werden.

Ein Beispiel für eine Vorrichtung zum Herstellen dreidimensionaler Werkstücke durch Pulverbettschmelzen findet sich in der EP 3 023 227 B1. Die in diesem Dokument beschriebene Vorrichtung umfasst eine Prozesskammer, in der ein Träger und eine Pulveraufbringeinrichtung zum Aufbringen eines Rohmaterialpulvers auf den Träger untergebracht sind. Die Prozesskammer ist mit einem Pulvereinlass zum Zuführen von Rohmaterialpulver zu der Pulveraufbringeinrichtung und einem Pulverauslass zum Abführen von überschüssigem Rohmaterialpulver aus der Prozesskammer versehen. Eine Pulverkreislaufleitung, in der eine Fördereinrichtung zum Fördern des Rohmaterialpulvers durch die Pulverkreislaufleitung angeordnet ist, verbindet den Pulverauslass der Prozesskammer mit dem Pulvereinlass der Prozesskammer. Weiterer Stand der Technik findet sich in der DE 10 2017 118065 A1, die sich allgemein auf eine generative Fertigungsanlage und ein Verfahren zur Herstellung von Bauteilen mittels dieser generativen Fertigungsanlage bezieht und in der DE 20 2019 001440 U1, die sich allgemein auf eine Bürstendichtung in einer Anlage zur generativen Herstellung von Bauteilen bezieht.

Anlagen zur Herstellung dreidimensionaler Werkstücke mittels eines generativen Schichtbauverfahrens und insbesondere durch Pulverbettschmelzen weisen üblicherweise mechanische Bauteile auf, die entsprechend bewegt werden. Durch das Pulver kommt es zu einer erhöhten Abnutzung der bewegbaren Bauteile. Pulver aus bestimmten Materialien (wie zum Beispiel Metall oder Keramik) weist abrasive Eigenschaften auf. Die Anhaftung des Pulvers an einer Wand und/oder an einer Dichtung kann hierbei relevant für die abrasiven Eigenschaften sein. Pulver ist eine Form von Schüttgut. Auch anderes Schüttgut als Pulver kann abrasive Eigenschaften aufweisen.

Dichtungen zwischen einer Plattenanordnung und einer Prozesskammerinnenwand können frühzeitig verschleißen. Insbesondere beim Nach-oben-Fahren einer Plattenanordnung der Anlage, auf der sich das Werkstück und umgebendes Pulver in der Prozesskammer befindet, kann Pulver unter die Dichtungen gezogen werden, was zu einem schnellen Verschleiß der Dichtungen führen kann. In der Folge kann Pulver durch die Dichtungen in die Umgebung der Anlage gelangen und den Raum, in der die Anlage positioniert ist, verunreinigen.

Aufgabe der Erfindung ist es, ein Dichtungssystem bereitzustellen, das zur Verwendung in einer Anlage zur Herstellung eines dreidimensionalen Werkstücks mittels eines generativen Schichtbauverfahrens geeignet ist und das insbesondere ein Verschleißen von mechanischen Bauteilen in der Anlage reduziert. Ferner liegt der Erfindung die Aufgabe zugrunde, ein Dichtungssystem für eine Anlage zur Herstellung eines dreidimensionalen Werkstücks mithilfe eines generativen Schichtbauverfahrens bereitzustellen, das eine Kühlung bestimmter Bauteile der Anlage und insbesondere der Dichtung oder Dichtungen und/oder einer Plattenanordnung der Anlage erlaubt, um insbesondere deren Lebensdauer zu verlängern. Weiterhin liegt der Erfindung die Aufgabe zugrunde, die Reinhaltung der Anlage und/oder der Umgebung der Anlage sowie die Arbeitssicherheit bei der Benutzung der Anlage zu gewährleisten.

Diese Aufgabe wird durch ein Dichtungssystem mit den Merkmalen des Patentanspruchs 1, durch ein System mit den Merkmalen des Patentanspruchs 13 und durch eine Anlage mit den Merkmalen des Patentanspruchs 14 gelöst.

Es wird ein Dichtungssystem für eine Anlage zur Herstellung eines dreidimensionalen Werkstücks mittels eines generativen Schichtbauverfahrens beschrieben, wobei das Dichtungssystem umfasst eine erste Dichtung, die ausgebildet ist, um einen Zwischenraum auf einem ersten Umfang zwischen einer Prozesskammerinnenwand und einer Pulvermaterial-tragenden Plattenanordnung in einer Prozesskammer der Anlage abzudichten, und eine zweite Dichtung, die ausgebildet ist, um den Zwischenraum auf einem zweiten Umfang zwischen der Prozesskammerinnenwand und der Pulvermaterial-tragenden Plattenanordnung in der Prozesskammer der Anlage abzudichten, wobei die erste Dichtung von der zweiten Dichtung beabstandet ist, um beim Abdichten, durch die erste Dichtung und die zweite Dichtung, des Zwischenraums zwischen der Prozesskammerinnenwand und der Plattenanordnung einen Kanal zwischen der ersten Dichtung und der zweiten Dichtung an einem Rand des Dichtungssystems auszubilden.

In manchen Beispielen des Dichtungssystems ist eine Dichtung (oder beide Dichtungen) als Dichtlippe ausgebildet.

Eine oder beide der Dichtungen können ein gasdurchlässiges Dichtungsmaterial umfassen. Dieses gasdurchlässige Dichtungsmaterial ist in manchen Beispielen robuster gegen Verschleiß als gasundurchlässiges Dichtungsmaterial. Eine oder beide der Dichtungen können zum Beispiel als Filzdichtungen und/oder Abstreifer ausgestaltet sein. In manchen Beispielen ist die obere Dichtung verschleißoptimiert und die untere Dichtung (gas)dichtungsoptimiert.

Die Form der Dichtungen kann ringförmig, rechteckig (zum Beispiel quadratisch) sein oder eine andere Form aufweisen. Die Form einer Dichtung ist hierbei insbesondere an die Form der Prozesskammer (d. h. der Prozesskammerinnenwand) und/oder das Innere eines Bauzylinders/einer Prozesskammer und/oder die Form der Bauplattform angepasst.

Der beim Abdichten des Zwischenraums zwischen der Prozesskammerinnenwand und der Plattenanordnung ausgebildete Kanal wird durch die erste Dichtung und die zweite Dichtung begrenzt. Ferner wird der Kanal durch die Prozesskammerinnenwand und die Plattenanordnung begrenzt.

Die erste Dichtung ist von der zweiten Dichtung in mit Bezug auf die Prozesskammerinnenwand bzw. die Plattenanordnung vertikalen Richtung beabstandet, sodass beim Abdichten des Zwischenraums zwischen der Prozesskammerinnenwand und der Plattenanordnung der Kanal zwischen der ersten Dichtung und der zweiten Dichtung an einem Rand des Dichtungssystems ausgebildet werden kann.

Die Plattenanordnung kann als Träger für Pulvermaterial dienen. In manchen Beispielen ist der Pulvermaterialträger separat über oder auf der Plattenanordnung angebracht.

Durch die Ausbildung des Kanals zwischen der ersten Dichtung und der zweiten Dichtung an einem Rand des Dichtungssystems kann eine im Dichtungsbereich integrierte Absaugung des Pulvers, das durch die obere Dichtung gelangen kann, stattfinden. Hierdurch kann der Verschleiß der unteren der beiden Dichtungen verlangsamt werden, indem durch die obere Dichtung gelangendes Pulver abgesaugt werden kann, bevor es an die untere Dichtung gelangt.

Ferner kann in dem zwischen der ersten Dichtung und der zweiten Dichtung ausgebildeten Kanal eine Gasströmung zur Kühlung der Dichtungen und/oder der Plattenanordnung und/oder der Hubmechanik der Anlage und/oder anderer Teile der Anlage erzeugt werden. Durch die Gasströmung kann ein kontrollierter Temperaturabfluss erreicht werden. Durch die Kühlung der Plattenanordnung kann eine Wärmeabstrahlung der Plattenanordnung (insbesondere nach unten) verhindert beziehungsweise eingeschränkt werden. Durch die Kühlung der Dichtungen kann die Lebensdauer der Dichtungen erhöht werden.

In manchen Beispielen des Dichtungssystems umfasst der Rand des Dichtungssystems einen umlaufenden Rand des Dichtungssystems, an dem der Kanal beim Abdichten des Zwischenraums ausgebildet ist. Somit kann sämtliches Pulvermaterial, das vom Träger, der Teil der Plattenanordnung sein kann, durch die obere Dichtung in den Kanal gelangt, durch ein Absaugen des mit Pulvermaterial versetzten Gases im Kanal abgesaugt werden.

In manchen Beispielen umfasst das Dichtungssystem ferner eine Gaszufuhrquelle, die mit dem beim Abdichten des Zwischenraums ausgebildeten Kanal gekoppelt ist und ausgebildet ist, ein Gas dem Kanal zum Erzeugen eines Gasstroms im Kanal zuzuführen. Durch die Gaszufuhrquelle kann der Gasstrom im Kanal besonders genau gesteuert werden. Insbesondere kann durch die Gaszufuhrquelle der Druck im Kanal je nach Bedarf erhöht beziehungsweise reduziert werden. In manchen Beispielen kann hierdurch verhindert werden, dass zusätzliches Pulvermaterial, das auf dem Träger bzw. der Plattenanordnung ausgebreitet ist, in den Kanal gesogen wird, bzw. dass Pulvermaterial vom Kanal in den oberen Teil der Prozesskammer, in dem die Herstellung des dreidimensionalen Werkstücks stattfindet, gepresst wird. Ferner kann durch die Gaszufuhrquelle die Geschwindigkeit des Gasstroms im Kanal gesteuert werden, um die Kühlung der Dichtungen bzw. der Plattenanordnung durch den Gasstrom zu steuern.

In manchen Beispielen umfasst das Dichtungssystem ferner eine Gasabsaugung, die mit dem beim Abdichten des Zwischenraums ausgebildeten Kanal gekoppelt ist und ausgebildet ist, ein Gas aus dem Kanal zum Erzeugen eines Gasstroms im Kanal abzusaugen. Durch die Gasabsaugung kann der Gasstrom im Kanal besonders genau gesteuert werden. Der Druck im Kanal kann ferner durch die Gasabsaugung angepasst werden, sodass verhindert werden kann, dass zusätzliches Pulvermaterial, das auf dem Träger bzw. der Plattenanordnung ausgebreitet ist, in den Kanal gesogen wird, bzw. dass Pulvermaterial im Kanal bei einem im Vergleich zu einem Druck im oberen Teil der Prozesskammer, in dem die Herstellung des dreidimensionalen Werkstücks stattfindet, höheren Druck in den oberen Teil der Prozesskammer gepresst wird. Ferner kann durch die Gasabsaugung die Geschwindigkeit des Gasstroms im Kanal gesteuert werden, um die Kühlung der Dichtungen bzw. der Plattenanordnung durch den Gasstrom zu steuern.

Insbesondere eine gleichzeitige Steuerung der Gaszufuhrquelle und der Gasabsaugung erlaubt es, den Druck im Kanal und/oder die Geschwindigkeit des Gasstroms im Kanal präzise zu steuern.

In manchen Beispielen umfasst das Dichtungssystem ferner einen Pulverkreislauf, der mit der Gasabsaugung und/oder der Gaszufuhrquelle gekoppelt ist und ausgebildet ist, Pulvermaterial, das sich im durch die Gasabsaugung abgesaugten und/oder im durch die Gaszufuhrquelle durch den Kanal gedrückte Gas befindet, in ein Pulverdepot der Anlage zurückzuführen. Das in das Pulverdepot der Anlage zurückgeführte Pulvermaterial kann somit für einen weiteren Prozess zur Herstellung des dreidimensionalen Werkstücks benutzt werden.

In manchen Beispielen ist das Dichtungssystem ausgebildet, um den Gasstrom im Kanal bei einer Aufwärtsbewegung der Plattenanordnung in der Prozesskammer und/oder während der Herstellung des dreidimensionalen Werkstücks mittels des generativen Schichtbauverfahrens zu erzeugen. Insbesondere bei einer Aufwärtsbewegung der Plattenanordnung in der Prozesskammer kann durch die Erzeugung des Gasstroms verhindert werden, dass Pulvermaterial durch die erste Dichtung zur zweiten Dichtung gelangt. Bei der Herstellung des dreidimensionalen Werkstücks mittels des generativen Schichtbauverfahrens können durch den Gasstrom im Kanal die Dichtungen und die Plattenanordnung zudem gekühlt werden. In beiden Prozessen kann die Lebensdauer der beweglichen bzw. verfahrbaren Elemente des Dichtungssystems bzw. der Anlage verlängert werden.

In manchen Beispielen umfasst das Dichtungssystem ferner einen oder mehrere Drucksensoren, die ausgebildet sind, einen Druck im Kanal zu erfassen, wobei das Dichtungssystem ausgebildet ist, eine Druckdifferenz zwischen dem Druck im Kanal und einem Umgebungsdruck, insbesondere einem Druck in der Prozesskammer, zu reduzieren. Der Druck in der Umgebung des Kanals und insbesondere in der Prozesskammer kann durch einen oder mehrere weitere Drucksensoren an entsprechender Position (zum Beispiel im Teil der Prozesskammer, in der die Herstellung des dreidimensionalen Werkstücks stattfindet) erfasst werden. Die Reduzierung der Druckdifferenz erlaubt es, dass Pulvermaterial aus dem Teil der Prozesskammer, in dem die Herstellung des dreidimensionalen Werkstücks stattfindet, nicht in den Kanal gesogen wird, und/oder umgekehrt.

In manchen Beispielen des Dichtungssystems sind die Gaszufuhrquelle und/oder die Gasabsaugung ausgebildet, um die Druckdifferenz basierend auf dem Druck im Kanal und dem Umgebungsdruck (zum Beispiel dem Druck im Teil der Prozesskammer, in dem die Herstellung des dreidimensionalen Werkstücks stattfindet) zu reduzieren. Durch eine Steuerung der Gaszufuhrquelle und/oder der Gasabsaugung kann der Druck im Kanal gesteuert werden.

Gemäß der Erfindung kann das Dichtungssystem ausgebildet sein, um eine Gasströmung im Kanal in Umfangrichtung um die Plattenanordnung zu erzeugen. Die Gasströmungsrichtung ist hierbei parallel bzw. im Wesentlichen parallel zu Ebenen, in denen die Dichtungen liegen. Pulvermaterial, das durch die obere Dichtung in den Kanal gelangt, kann durch den Gasstrom im Kanal mitgerissen werden, bevor es an die untere Dichtung gelangt.

Gemäß der Erfindung kann das Dichtungssystem auch ausgebildet sein, um eine Gasströmung im Kanal (im Wesentlichen) senkrecht zur Umfangrichtung des Kanals zu erzeugen. Die Gasströmung findet somit (im Wesentlichen) in vertikaler Richtung zwischen den zwei Dichtungen (d.h. im Wesentlichen senkrecht zu den Ebenen, in denen die Dichtungen liegen) statt. Durch die vertikale Gasströmung kann ein gleichmäßigeres Druckprofil über den gesamten Kanalbereich erhalten werden. In manchen Beispielen kann die vertikale Gasströmung zusätzlich von Vorteil sein, da Pulvermaterial, das durch die obere Dichtung in den Kanal gelangt, von einem Vordringen zur unteren Dichtung abgehalten werden kann und sofort vor einem tieferen Eindringen in den Kanal durch diesen abgeführt werden kann.

In manchen Beispielen umfasst das Dichtungssystem ferner einen oder mehrere Überdruckanschlüsse und einen oder mehrere Unterdruckanschlüsse, die derart angeordnet sind, dass beim Ausbilden des Kanals die Überdruckanschlüsse und die Unterdruckanschlüsse mit dem Kanal derart gekoppelt sind, dass in Kanalrichtung Überdruckanschlüsse und Unterdruckanschlüsse abwechseln. Eine Gasströmung kann hierdurch von einem Überdruckanschluss ausgehend in beide Kanalrichtungen zu einem Unterdruckanschluss erzeugt werden.

In manchen Beispielen des Dichtungssystems sind beim Ausbilden des Kanals die Überdruckanschlüsse und die Unterdruckanschlüsse mit dem Kanal derart gekoppelt, dass Abstände in Kanalrichtung von jeweils aufeinanderfolgenden Anschlüssen der Überdruckanschlüsse und Unterdruckanschlüsse gleich lang sind. Somit kann eine gleichmäßige Gasströmung über die vollständige Kanallänge hinweg bewerkstelligt werden.

Die Überdruckanschlüsse bzw. Unterdruckanschlüsse haben in manchen Beispielen die gleichen Abstände zueinander und dementsprechend gleiche Druckverteilungen. In manchen Beispielen sind die Überdruckanschlüsse bzw. Unterdruckanschlüsse auf halber Länge der Plattenanordnungsseiten angeordnet. Im Fall einer runden bzw. kreisförmigen Plattenanordnung sind die Überdruckanschlüsse bzw. Unterdruckanschlüsse in manchen Beispielen jeweils alle 90° angeordnet.

In manchen Beispielen umfasst das Dichtungssystem ferner einen oder mehrere Zuleitungskanäle über die der eine oder die mehreren Überdruckanschlüsse und/oder der eine oder die mehreren Unterdruckanschlüsse mit dem beim Abdichten des Zwischenraums ausgebildeten Kanal gekoppelt sind, wobei sich ein Querschnitt eines der Zuleitungskanäle vor einem Eintritt in einen Bereich zwischen der ersten Dichtung und der zweiten Dichtung verengt und/oder der Zuleitungskanal auffächert. Hierdurch kann das Profil der Strömungsgeschwindigkeit der Gasströmung über die Umfangsrichtung möglichst konstant gehalten werden. Pulvermaterial, das sich im Kanal befindet, kann somit durch die Gasströmung gleichmäßig entfernt werden bzw. in das Pulverdepot der Anlage zurückgeführt werden. Durch eine konstante Strömungsgeschwindigkeit der Gasströmung über die Umfangsrichtung kann ferner der Druck über die Umfangsrichtung konstant gehalten werden. Dies erlaubt es, zu verhindern, dass Pulvermaterial vom oberen Teil der Prozesskammer, in dem die Herstellung des dreidimensionalen Werkstücks stattfindet, durch eine lokale Druckdifferenz des Drucks im Kanal und des Drucks im oberen Teil der Prozesskammer in den Kanal gesogen bzw. gedrückt wird oder in den oberen Teil der Prozesskammer gesogen bzw. gedrückt wird.

In manchen Beispielen umfasst das Dichtungssystem ferner einen Prozessor, der ausgebildet ist, um mittels einer numerischen Strömungssimulation ("computational fluid dynamics") eine Gasströmung im Kanal zu berechnen und eine Gaszufuhr über den einen oder die mehreren Überdruckanschlüsse und/oder eine Gasabfuhr über den einen oder die mehreren Unterdruckanschlüsse basierend auf der berechneten Gasströmung im Kanal zu steuern. Das Profil der Strömungsgeschwindigkeit über die Umfangsrichtung kann hierdurch möglichst konstant gehalten werden. Die Strömungssimulation ist in manchen Beispielen einmalig vorgesehen, um für eine gegebene Konstruktion mit Kanälen die optimale Kanalverteilung zu bestimmen. Alternativ oder zusätzlich findet die Simulation dynamisch während der Herstellung des dreidimensionalen Werkstücks statt.

In manchen Beispielen des Dichtungssystems umfasst die erste Dichtung ein verschleißbeständigeres Material als die zweite Dichtung. Die erste Dichtung kann hierbei insbesondere die obere Dichtung sein, die in manchen Beispielen zwar begrenzt pulver- und/oder gasdurchlässig (bzw. pulver- und/oder gasdurchlässiger als die zweite Dichtung) ist, dafür aber verschleißbeständiger ist als die zweite Dichtung. In manchen Beispielen ist die erste Dichtung eine Filzdichtung oder eine Abstreifer aus zum Beispiel Metall, Keramik, Kohlenstoff, Kunststoff, Naturfasern oder eine Kombination hiervon. In manchen Beispielen umfasst die zweite Dichtung Polytetrafluorethylen (PTFE).

Es wird ferner ein System für eine Anlage zur Herstellung eines dreidimensionalen Werkstücks mittels eines generativen Schichtbauverfahrens beschrieben, wobei das System umfasst ein Dichtungssystem nach einem der hierin beschriebenen Beispiele, und eine nach oben und/oder unten fahrbare Plattenanordnung, die mit dem Dichtungssystem gekoppelt ist. In manchen Beispielen wird der beim Abdichten ausgebildete Kanal unter anderem von der ersten Dichtung, der zweiten Dichtung und der fahrbaren Plattenanordnung gebildet. Die vertikale Position des Kanals ändert sich somit mit der Position der fahrbaren Plattenanordnung.

Es wird ferner eine Anlage zur Herstellung eines dreidimensionalen Werkstücks mittels eines generativen Schichtbauverfahrens beschrieben, wobei die Anlage umfasst: ein wie oben beschriebenes System; eine Prozesskammer, in der das System angeordnet ist; ein Pulverdepot zum Zuführen von Pulvermaterial in die Prozesskammer zur Herstellung des dreidimensionalen Werkstücks aus dem Pulvermaterial mittels des generativen Schichtbauverfahrens, wobei das Pulverdepot mit dem Dichtungssystem gekoppelt ist, um vom Dichtungssystem abgesaugtes Pulvermaterial dem Pulverdepot zuzuführen; und eine Bestrahlungseinheit zum Bestrahlen einer auf der Plattenanordnung verteilten Pulverschicht zur Herstellung des dreidimensionalen Werkstücks.

Die Anlage kann ferner einen oder mehrere Sensoren umfassen, die ausgebildet sind, um einen Druck in der Prozesskammer und/oder in der Umgebung der Anlage zu erfassen. Der Druck in der Prozesskammer und/oder in der Umgebung der Anlage kann somit von der Anlage mit dem Druck an einer oder mehreren Stellen im Kanal verglichen werden, wobei der Druck im Kanal durch die Anlage angepasst werden kann, um eine Druckdifferenz zwischen dem Druck in der Prozesskammer bzw. (und/oder) in der Umgebung der Anlage und dem Druck an der einen oder den mehreren Stellen im Kanal zu reduzieren. Alternativ oder zusätzlich zur Anpassung des Druckes im Kanal zur Reduzierung der Druckdifferenz kann auch der Druck in der Prozesskammer und/oder der Druck in der Umgebung der Anlage entsprechend gesteuert werden.

Die Erfindung wird im Folgenden anhand der beigefügten schematischen Figuren näher erläutert, in denen gleiche Elemente mit gleichen Bezugszeichen versehen sind, und von denen
Figur 1 eine Seitenansicht einer schematischen Zeichnung eines Dichtungssystems für eine Anlage zur Herstellung eines dreidimensionalen Werkstücks mithilfe eines generativen Schichtbauverfahrens im Querschnitt zeigt;
Figuren 2a bis c verschiedene Ansichten einer schematischen Zeichnung eines Dichtungssystems für eine Anlage zur Herstellung eines dreidimensionalen Werkstücks mithilfe eines generativen Schichtbauverfahrens zeigen;
Figuren 3a bis c verschiedene Ansichten einer schematischen Zeichnung eines weiteren Dichtungssystems für eine Anlage zur Herstellung eines dreidimensionalen Werkstücks mithilfe eines generativen Schichtbauverfahrens zeigen; und
Figur 4 ein schematisches Blockdiagramm einer Anlage zur Herstellung eines dreidimensionalen Werkstücks mithilfe eines generativen Schichtbauverfahrens zeigt.

Die vorliegende Erfindung betrifft insbesondere eine Bauzylinder-Dichtungsabsaugung.

Die Dichtungen zwischen einem Plattenpaket (Plattenanordnung) und der Bauzylinderwand (Prozesskammerwand) können relativ frühzeitig verschleißen.

Insbesondere während eines Auspackvorgangs wird je nach Maschinenaufbau die Plattenanordnung samt Bauteil und umgebendem Pulver in der Prozesskammer nach oben gefahren. Hierbei kann Pulver unter die Dichtlippen (bzw. allgemein Dichtung(en)) gezogen werden, was zu einem schnellen Verschleiß der Plattenpaketdichtungen führen kann. In der Folge kann Pulver durch die Dichtung(en) in die Umgebung gelangen und den Maschineninnenraum verunreinigen.

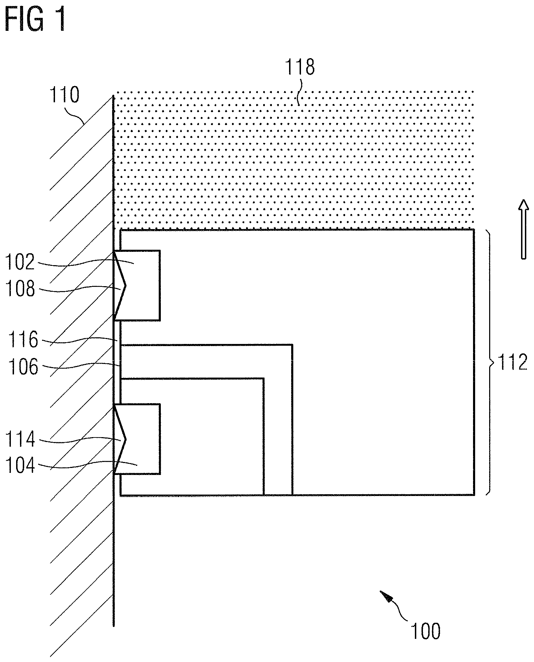

Figur 1 zeigt eine Seitenansicht einer schematischen Zeichnung eines Dichtungssystems 100 für eine Anlage zur Herstellung eines dreidimensionalen Werkstücks mithilfe eines generativen Schichtbauverfahrens im Querschnitt.

In diesem Beispiel umfasst das Dichtungssystem 100 eine erste Dichtung 102 und eine zweite Dichtung 104, wobei die erste Dichtung 102 von der zweiten Dichtung 104 beabstandet ist. Die erste Dichtung 102 ist auf einem ersten Umfang 108 zwischen einer Prozesskammerinnenwand 110 und einer Plattenanordnung 112 ausgebildet. Die zweite Dichtung 104 ist auf einem zweiten Umfang 114 zwischen der Prozesskammerinnenwand 110 und der Plattenanordnung 112 ausgebildet. Somit wird durch die erste Dichtung 102 und die zweite Dichtung 104 ein Zwischenraum 116 zwischen der Prozesskammerinnenwand 110 und der Plattenanordnung 112 abgedichtet.

Zwischen der Prozesskammerinnenwand 110, der Plattenanordnung 112, der ersten Dichtung 102 und der zweiten Dichtung 104 wird somit ein Kanal 106 ausgebildet.

Pulvermaterial 118 befindet sich in diesem Beispiel auf der Plattenanordnung 112. In manchen Beispielen wird ein separater Träger auf der Plattenanordnung 112 angebracht, der das Pulvermaterial 118 empfangen kann.

Eine im Dichtungsbereich integrierte Absaugung des Pulvers kann zum einen den Verschleiß der zweiten (unteren) Dichtung 104 der beiden Plattenanordnungsdichtungen verlangsamen, indem durch die erste (obere) Dichtung 102 gelangendes Pulvermaterial 118 abgesaugt wird, bevor es an die zweite Dichtung gelangt. Ferner kann durch die im Dichtungsbereich integrierte Absaugung des Pulvers durch die erste Dichtung 102 gelangendes Pulver in den Pulverkreislauf zurückbefördert werden, sodass es nicht den Maschineninnenraum verunreinigen kann.

Zwischen den Dichtungen des Plattenpakets befindet sich mindestens ein Kanal, der von einem Gas durchströmt wird, das durch die obere Dichtung gelangendes Pulver mitreißt und in den Pulverkreislauf der Anlage zurückführt.

Der Druck und/oder der Druckverlauf im Kanal kann mittels eines oder mehrerer Druckaufnehmer (Drucksensoren) überwacht und auf Werten nahe dem Umgebungsdruck gehalten werden, so dass eine eventuelle Last auf die Dichtungen durch eine Druckdifferenz möglichst gering gehalten werden kann. Außerdem kann sichergestellt werden, dass dadurch kein Pulver durch den Dichtspalt gesaugt wird oder Gas durch die Dichtung ins Pulver 118 gedrückt wird.

Die Durchströmung kann entweder nur während der Aufwärtsbewegung des Plattenpakets aktiviert sein, da dies der für die Dichtungen kritischste Betriebszustand sein kann und besonders dabei Pulver durch die Dichtungen gelangen kann. Zusätzlich oder alternativ hierzu kann die Durchströmung während des Baujobs, d. h. während der Herstellung des dreidimensionalen Werkstücks aktiviert sein. Die Gasströmung kann hierbei zusätzlich der Kühlung der Dichtungen und/oder des Plattenpakets dienen, was zu einer Lebensdauerverlängerung der Plattenpaketbauteile beitragen kann.

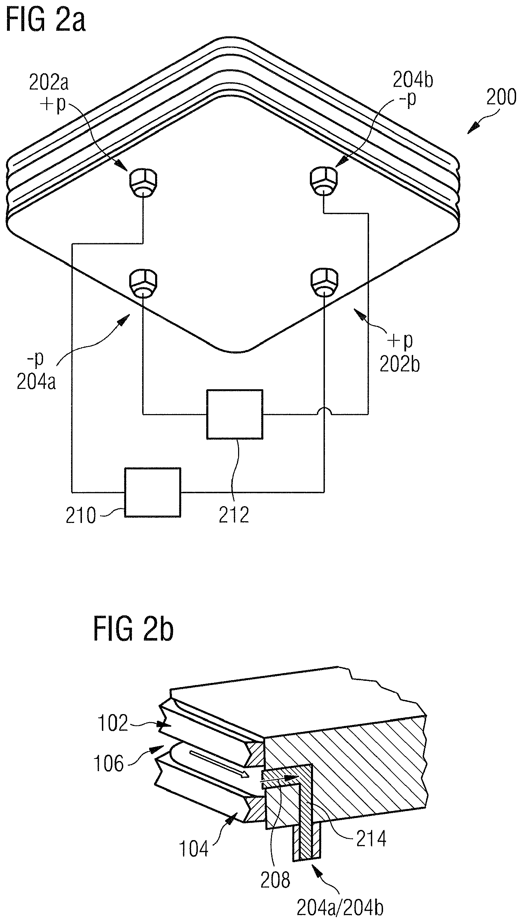

Figuren 2a bis c zeigen verschiedene Ansichten einer schematischen Zeichnung eines Dichtungssystems 200 für eine Anlage zur Herstellung eines dreidimensionalen Werkstücks mithilfe eines generativen Schichtbauverfahrens.

Figur 2a zeigt eine schematische Zeichnung des Dichtungssystems 200 in perspektivischer Ansicht.

In diesem Beispiel umfasst das Dichtungssystem zusätzlich zu der ersten Dichtung und der zweiten Dichtung zwei Überdruckanschlüsse 202a und 202b. Die Überdruckanschlüsse 202a und 202b sind in diesem Beispiel mit einer Gaszufuhrquelle 210 gekoppelt, um Gas durch die Gaszufuhrquelle 210 über die Überdruckanschlüsse 202a und 202b in den Kanal einzubringen, um im Kanal eine Gasströmung zu erzeugen.

In diesem Beispiel umfasst das Dichtungssystem zusätzlich zwei Unterdruckanschlüsse 204a und 204b. Die Unterdruckanschlüsse 204a und 204b sind in diesem Beispiel mit einer Gasabsaugung 212 gekoppelt, um Gas durch die Gasabsaugung 212 über die Unterdruckanschlüsse 204a und 204b aus dem Kanal abzusaugen, wodurch im Kanal eine Gasströmung erzeugt wird.

In den hierin beschriebenen Beispielen können alternativ lediglich ein oder mehrere Überdruckanschlüsse, oder ein oder mehrere Unterdruckanschlüsse benutzt werden.

Figur 2b zeigt eine schematische Zeichnung des Dichtungssystems 200 in perspektivischer Ansicht zum Teil im Querschnitt.

In diesem Beispiel wird ein Gasstrom 208 entlang des Kanals 106 erzeugt und über einen Zuleitungskanal 214 durch einen Unterdruckanschluss abgesaugt. Der Anschluss kann auch für einen Überdruckanschluss dienen.

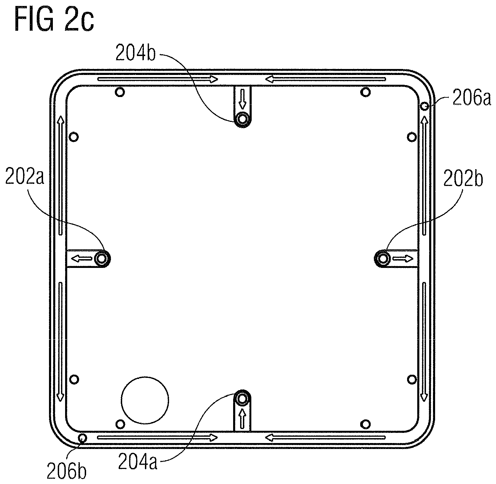

Figur 2c zeigt eine Ansicht einer schematische Zeichnung des Dichtungssystems 200 von unten im Querschnitt.

In diesem Beispiel sind Drucksensoren 206a und 206b seitlich an der Plattenanordnung angebracht, um den Druck im Kanal 106 an entsprechenden Stellen messen zu können.

Wie aus den Figuren 2a bis c zu sehen ist, strömt in diesem Beispiel das Gas durch einen Kanal in Umfangsrichtung um das Plattenpaket. Gegebenenfalls durch die obere Dichtung gelangendes Pulver müsste diesen Kanal passieren, bevor es an die untere Dichtung gelangt und kann durch den Gasstrom im Kanal mitgerissen und in den Pulverkreislauf der Maschine zurückgeführt werden. Auf der Unterseite des Plattenpakets befinden sich in diesem Beispiel zwei Druckanschlüsse (+p) und zwei Sauganschlüsse (-p), jeweils vorzugsweise auf halber Länge der Plattenpaketseiten. Diese sind direkt mit dem zwischen den Dichtungen um das gesamte Plattenpaket umlaufenden Kanal (Nut) verbunden. Im Fall eines kreisförmigen Plattenpakets können die Druck-/Sauganschlüsse zum Beispiel jeweils alle 90° angeordnet sein.

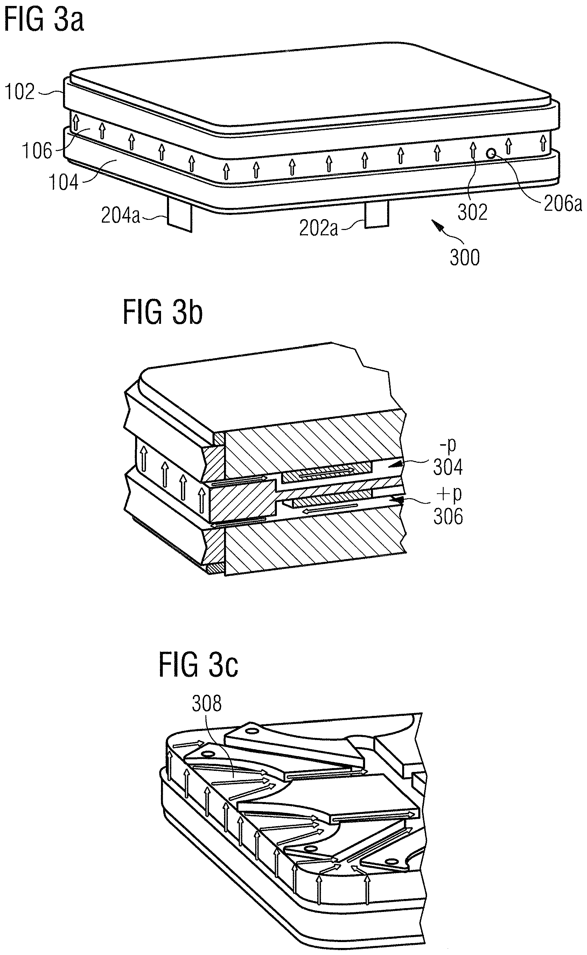

Figuren 3a bis c zeigen verschiedene Ansichten einer schematischen Zeichnung eines weiteren Dichtungssystems 300 für eine Anlage zur Herstellung eines dreidimensionalen Werkstücks mithilfe eines generativen Schichtbauverfahrens.

Figur 3a zeigt eine schematische Zeichnung des Dichtungssystems 300 in perspektivischer Ansicht.

In diesem Beispiel wird ein Gasstrom 302 erzeugt, der von der unteren Dichtung im Kanal im Wesentlichen senkrecht zur Plattenanordnung zur oberen Dichtung strömt. Figur 3b zeigt eine schematische Zeichnung des Dichtungssystems 300 in perspektivischer Ansicht zum Teil im Querschnitt.

In diesem Beispiel strömt das Gas über einen Überdruckanschluss durch einen Zuleitungskanal 306 in Richtung des Kanals 106. Nachdem das Gas von der unteren Dichtung durch den Kanal 106 im Wesentlichen senkrecht zur Plattenanordnung zur oberen Dichtung geströmt ist, wird es durch einen Unterdruckanschluss über den Zuleitungskanal 304 abgesaugt.

Figur 3c zeigt eine schematische Zeichnung des Dichtungssystems 300 in perspektivischer Ansicht zum Teil im Querschnitt.

Ein Querschnitt der Zuleitungskanäle 308 ändert sich mit der Gasströmungsrichtung, um das Profil der Strömungsgeschwindigkeit möglichst konstant zu halten.

In diesem Beispiel strömt das Gas in vertikaler Richtung innerhalb des Bereichs zwischen den Dichtungen, entweder von oben nach unten oder von unten nach oben. Die Zu- und Abströmkanäle sind so optimiert, dass das Profil der Strömungsgeschwindigkeit über die Umfangsrichtung möglichst konstant ist. Dies kann erreicht werden, indem sich die Ein-/Ausströmquerschnitte vor dem Eintreten in den Bereich zwischen den Dichtungen verengen und/oder auffächern. Eine Optimierung der Gasströmung wird in manchen Beispielen durch Computational Fluid Dynamics (CFD)-Berechnungen erreicht.

Es sei darauf hingewiesen, dass in manchen Beispielen im Dichtungssystem der Figur 2 alternativ oder zusätzlich eine im Wesentlichen senkrecht zur Plattenanordnung stattfindende Gasströmung erzeugt werden kann, wie dies in Figur 3 gezeigt ist. Ferner kann in manchen Beispielen im Dichtungssystem der Figur 3 alternativ oder zusätzlich eine parallel zur (d. h. entlang der) Kanallängsrichtung stattfindende Gasströmung erzeugt werden, wie dies in Figur 2 gezeigt ist. Entsprechende Zu- und Abströmkanäle des Dichtungssystems der Figur 3 können hierzu im Dichtungssystem der Figur 2 benutzt werden, und umgekehrt.

Die obere Dichtung ist in manchen Beispielen eine Dichtung, die von vornherein zwar begrenzt pulver- und/oder gasdurchlässig, dafür aber verschleißbeständiger ist als die untere Dichtung, die zum Beispiel eine PTFE-Lippendichtung sein kann. Die obere Dichtung ist in manchen Beispielen eine Filzdichtung oder ein Abstreifer aus Metall, Keramik, Kohlenstoff, Kunststoff, Naturfasern oder eine Kombination hiervon.

Die Anzahl der Dichtungen sowie die Anzahl der Kanäle zwischen den Dichtungen können zwischen verschiedenen Beispielen des Dichtungssystems variieren. Drei oder mehr Dichtungen mit folglich zwei oder mehr ausgebildeten Kanälen kann vorteilhaft dazu führen, dass weiter unten liegende Dichtungen langsamer verschleißen und insbesondere ein Verschleißen durch Pulver für die am weitesten unten liegende Dichtung im Wesentlichen verhindert werden kann.

Die Anzahl der Druck- und Sauganschlüsse und/oder -kanäle kann größer oder kleiner sein, als in den oben beschriebenen Beispielen angegeben.

Die Position der Druck- und Saugkanäle bzw. Verbindungsstellen zwischen Ringkanal und Druck-/Sauganschlüssen kann zwischen verschiedenen Beispielen über den Umfang des Plattenpakets variieren (z.B. nicht auf halber Länge der Plattenpaketseiten, sondern stattdessen in den Radien des Plattenpakets).

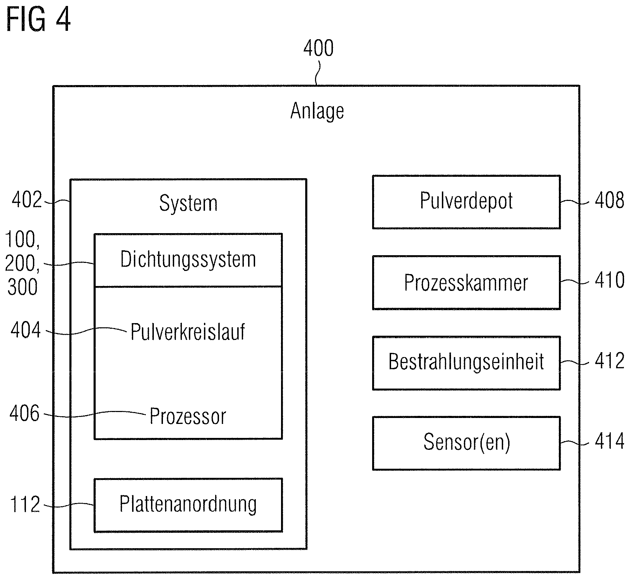

Figur 4 zeigt ein schematisches Blockdiagramm einer Anlage 400 zur Herstellung eines dreidimensionalen Werkstücks mithilfe eines generativen Schichtbauverfahrens.

In diesem Beispiel umfasst die Anlage ein System 402, das ein Dichtungssystem (100, 200,300) und eine Plattenanordnung 112 umfasst.

Das Dichtungssystem umfasst in diesem Beispiel einen Pulverkreislauf 404 und einen Prozessor 406.

Der Pulverkreislauf 404 ist in diesem Beispiel mit einem Pulverdepot 408 der Anlage 400 gekoppelt, sodass Pulvermaterial, das durch das Dichtungssystem vom Kanal abgesaugt wird, über den Pulverkreislauf 404 zum Pulverdepot 408 zurückgeführt werden kann.

Der Prozessor 406 berechnet Gasströmungen im Kanal sowie in den Zu- und/oder Abströmkanälen zum Kanal, wobei die Anlage 400 bzw. das Dichtungssystem ausgebildet sind, um durch CFD-Berechnungen die Gasströmungen zu optimieren (vor Beginn der Herstellung des dreidimensionalen Werkstücks und/oder während der Herstellung des dreidimensionalen Werkstücks) und insbesondere das Profil der Strömungsgeschwindigkeit über die Umfangsrichtung des Kanals möglichst konstant zu halten. Der Prozessor 406 erlaubt es, die Gasströmungen im Kanal sowie in den Zu- und/oder Abströmkanälen zum Kanal mit dem Druckverhalten in der Prozesskammer in Einklang zu bringen.

In diesem Beispiel umfasst die Anlage 400 ferner eine Prozesskammer 410, die mit dem Pulverdepot 408 gekoppelt ist. Das System 402 ist in der Prozesskammer 410 angeordnet.

Die Anlage 400 umfasst ferner in diesem Beispiel eine Bestrahlungseinheit 412 zum Bestrahlen einer Pulverschicht auf der Plattenanordnung 112 bzw. auf einem Träger, der über der Plattenanordnung 112 in der Prozesskammer 410 angeordnet ist. Hierdurch kann Pulvermaterial verfestigt werden, um eine Schicht des herzustellenden dreidimensionalen Werkstücks zu erzeugen.

Ferner umfasst in diesem Beispiel die Anlage 400 einen oder mehrere Sensoren 414. Diese sind in manchen Beispielen an der Prozesskammerinnenwand der Prozesskammer 410 angeordnet, um einen Druck in dem Teil der Prozesskammer 410, in dem das dreidimensionale Werkstück hergestellt wird, zu ermitteln. Zusätzlich oder alternativ hierzu können ein oder mehrere Sensoren auf einer Außenseite der Prozesskammer bzw. der Anlage angeordnet sein, um einen Umgebungsdruck einer Umgebung des Kanals zu bestimmen, wodurch es erlaubt, eine Druckdifferenz zwischen einem Druck im Kanal und dem Umgebungsdruck zu reduzieren.

Durch die Beispiele des hierin beschriebenen Dichtungssystems bzw. Systems bzw. der hierin beschriebenen Anlage kann die Lebensdauer insbesondere der Plattenpaketabdichtung (d. h. Dichtungen und/oder Plattenanordnung) verlängert werden. Insbesondere eine untere Dichtung wird entlastet und kann somit über einen längeren Zeitraum besser wirken. Es kann verhindert werden, dass Pulver in den Maschineninnenraum gelangt, wobei das Pulver stattdessen dem Pulverkreislauf zurückgeführt werden kann.

## Patentansprüche

1. Dichtungssystem (100, 200, 300) für eine Anlage (400) zur Herstellung eines dreidimensionalen Werkstücks mittels eines generativen Schichtbauverfahrens, wobei das Dichtungssystem (100, 200, 300) umfasst:
eine erste Dichtung (102), die ausgebildet ist, um einen Zwischenraum (116) auf einem ersten Umfang (108) zwischen einer Prozesskammerinnenwand (110) und einer Pulvermaterial-tragenden Plattenanordnung (112) in einer Prozesskammer (410) der Anlage (400) abzudichten, und
eine zweite Dichtung (104), die ausgebildet ist, um den Zwischenraum (116) auf einem zweiten Umfang (114) zwischen der Prozesskammerinnenwand (110) und der Pulvermaterial-tragenden Plattenanordnung (112) in der Prozesskammer (410) der Anlage (400) abzudichten,
wobei die erste Dichtung (102) und die zweite Dichtung (104) an der Plattenanordnung (112) angebracht sind und wobei die erste Dichtung (102) von der zweiten Dichtung (104) beabstandet ist, um beim Abdichten, durch die erste Dichtung (102) und die zweite Dichtung (104), des Zwischenraums (116) zwischen der Prozesskammerinnenwand (110) und der Plattenanordnung (112) einen Kanal (106) zwischen der ersten Dichtung (102) und der zweiten Dichtung (104) an einem Rand des Dichtungssystems (110) auszubilden, und
wobei das Dichtungssystem (100, 200, 300) ausgebildet ist, um eine Gasströmung (208) im Kanal (106) in Umfangrichtung um die Plattenanordnung (112) und/oder im Wesentlichen senkrecht zur Umfangrichtung des Kanals (106) zu erzeugen.

2. Dichtungssystem (100, 200, 300) nach Anspruch 1, wobei der Rand des Dichtungssystems (100, 200, 300) einen umlaufenden Rand des Dichtungssystems (100, 200, 300) umfasst, an dem der Kanal (106) beim Abdichten des Zwischenraums (116) ausgebildet ist.

3. Dichtungssystem (100, 200, 300) nach Anspruch 1 oder 2, ferner umfassend eine Gaszufuhrquelle (210), die mit dem beim Abdichten des Zwischenraums (116) ausgebildeten Kanal (106) gekoppelt ist und ausgebildet ist, ein Gas dem Kanal (106) zum Erzeugen eines Gasstroms (208, 302) im Kanal (106) zuzuführen.

4. Dichtungssystem (100, 200, 300) nach einem der vorhergehenden Ansprüche, ferner umfassend eine Gasabsaugung (212), die mit dem beim Abdichten des Zwischenraums (116) ausgebildeten Kanal (106) gekoppelt ist und ausgebildet ist, ein Gas aus dem Kanal (106) zum Erzeugen eines Gasstroms (208, 302) im Kanal (106) abzusaugen.

5. Dichtungssystem (100, 200, 300) nach Anspruch 4, ferner umfassend einen Pulverkreislauf (404), der mit der Gasabsaugung (212) und/oder der Gaszufuhrquelle (210) gekoppelt ist und ausgebildet ist, Pulvermaterial (118), das sich im durch die Gasabsaugung (212) abgesaugten und/oder im durch die Gaszufuhrquelle (210) durch den Kanal (106) gedrückte Gas befindet, in ein Pulverdepot (408) der Anlage (400) zurückzuführen.

6. Dichtungssystem (100, 200, 300) nach einem der Ansprüche 3 bis 5, wobei das Dichtungssystem (100, 200, 300) ausgebildet ist, um den Gasstrom (208, 302) im Kanal (106) bei einer Aufwärtsbewegung der Plattenanordnung (112) in der Prozesskammer (410) und/oder während der Herstellung des dreidimensionalen Werkstücks mittels des generativen Schichtbauverfahrens zu erzeugen.

7. Dichtungssystem (100, 200, 300) nach einem der vorhergehenden Ansprüche, ferner umfassend einen oder mehrere Drucksensoren (206a, 206b), die ausgebildet sind, einen Druck im Kanal (106) zu erfassen, wobei das Dichtungssystem (100, 200, 300) ausgebildet ist, eine Druckdifferenz zwischen dem Druck im Kanal (106) und einem Umgebungsdruck, insbesondere einem Druck in der Prozesskammer (410), zu reduzieren.

8. Dichtungssystem (100, 200, 300) nach Anspruch 7, wenn abhängig von einem der Ansprüche 3 bis 5, wobei die Gaszufuhrquelle (210) und/oder die Gasabsaugung (212) ausgebildet sind, um die Druckdifferenz basierend auf dem Druck im Kanal (106) und dem Umgebungsdruck zu reduzieren.

9. Dichtungssystem (100, 200, 300) nach einem der Ansprüche 1 bis 8, ferner umfassend einen oder mehrere Überdruckanschlüsse (202a, 202b) und einen oder mehrere Unterdruckanschlüsse (204a, 204b), die derart angeordnet sind, dass beim Ausbilden des Kanals (106) die Überdruckanschlüsse (202a, 202b) und die Unterdruckanschlüsse (204a, 204b) mit dem Kanal (106) derart gekoppelt sind, dass in Kanalrichtung Überdruckanschlüsse (202a, 202b) und Unterdruckanschlüsse (204a, 204b) abwechseln.

10. Dichtungssystem (100, 200, 300) nach Anspruch 9, wobei beim Ausbilden des Kanals (106) die Überdruckanschlüsse (202a, 202b) und die Unterdruckanschlüsse (204a, 204b) mit dem Kanal (106) derart gekoppelt sind, dass Abstände in Kanalrichtung von jeweils aufeinanderfolgenden Anschlüssen der Überdruckanschlüsse (202a, 202b) und Unterdruckanschlüsse (204a, 204b) gleich lang sind.

11. Dichtungssystem (100, 200, 300) nach Anspruch 9 oder 10, ferner umfassend einen oder mehrere Zuleitungskanäle (214, 304, 306, 308) über die der eine oder die mehreren Überdruckanschlüsse (202a, 202b) und/oder der eine oder die mehreren Unterdruckanschlüsse (204a, 204b) mit dem beim Abdichten des Zwischenraums (116) ausgebildeten Kanal (106) gekoppelt sind, wobei sich ein Querschnitt eines der Zuleitungskanäle (214, 304, 306, 308) vor einem Eintritt in einen Bereich zwischen der ersten Dichtung (102) und der zweiten Dichtung (104) verengt und/oder der Zuleitungskanal (214, 304, 306, 308) auffächert, insbesondere ferner umfassend einen Prozessor (406), der ausgebildet ist, um mittels der Drucksensoren eine Gasströmung im Kanal (106) so zu regeln, dass die Druckdifferenzen zwischen Kanal und Prozesskammer minimiert werden.

12. Dichtungssystem (100, 200, 300) nach einem der vorhergehenden Ansprüche, wobei die erste Dichtung (102) ein verschleißbeständigeres Material umfasst als die zweite Dichtung (104).

13. System (402) für eine Anlage (400) zur Herstellung eines dreidimensionalen Werkstücks mittels eines generativen Schichtbauverfahrens, wobei das System (402) umfasst:
ein Dichtungssystem (100, 200, 300) nach einem der vorhergehenden Ansprüche, und
eine nach oben und/oder unten fahrbare Plattenanordnung (112), die mit dem Dichtungssystem (100, 200, 300) gekoppelt ist.

14. Anlage (400) zur Herstellung eines dreidimensionalen Werkstücks mittels eines generativen Schichtbauverfahrens, wobei die Anlage (400) umfasst:
ein System (402) nach Anspruch 13;
eine Prozesskammer (410), in der das System (402) angeordnet ist;
ein Pulverdepot (408) zum Zuführen von Pulvermaterial (118) in die Prozesskammer (410) zur Herstellung des dreidimensionalen Werkstücks aus dem Pulvermaterial (118) mittels des generativen Schichtbauverfahrens, wobei das Pulverdepot (408) mit dem Dichtungssystem (100, 200, 300) gekoppelt ist, um vom Dichtungssystem (100, 200, 300) abgesaugtes Pulvermaterial (118) dem Pulverdepot (408) zuzuführen; und
eine Bestrahlungseinheit (412) zum Bestrahlen einer auf der Plattenanordnung (112) verteilten Pulverschicht zur Herstellung des dreidimensionalen Werkstücks.

15. Anlage (400) nach Anspruch 14, ferner umfassend einen oder mehrere Sensoren (414), die ausgebildet sind, um einen Druck in der Prozesskammer (410) und/oder in der Umgebung der Anlage (400) zu erfassen.

## Claims

1. Seal system (100, 200, 300) for an installation (400) for producing a three-dimensional workpiece by means of an additive layer manufacturing method, the seal system (100, 200, 300) comprising:
a first seal (102) which is configured to seal an intermediate space (116) on a first periphery (108) between a process chamber inner wall (110) and a plate assembly (112) supporting powder material in a process chamber (410) of the installation (400), and
a second seal (104) which is configured to seal the intermediate space (116) on a second periphery (114) between the process chamber inner wall (110) and the plate assembly (112) supporting powder material in the process chamber (410) of the installation (400),
wherein the first seal (102) and the second seal (104) are arranged on the plate assembly (112) and wherein the first seal (102) is spaced at a distance from the second seal (104) in order to form, on sealing by the first seal (102) and the second seal (104) of the intermediate space (116) between the process chamber inner wall (110) and the plate assembly (112), a channel (106) between the first seal (102) and the second seal (104) at an edge of the seal system (110), and
wherein the seal system (100, 200, 300) is configured to generate a gas flow (208) in the channel (106) in a circumferential direction around the plate assembly (112) and/or substantially perpendicular to the circumferential direction of the channel (106).

2. Seal system (100, 200, 300) according to claim 1, wherein the edge of the seal system (100, 200, 300) comprises a circumferential edge of the seal system (100, 200, 300) on which the channel (106) is formed on sealing of the intermediate space (116).

3. Seal system (100, 200, 300) according to claim 1 or 2, further comprising a gas supply source (210) which is coupled to the channel (106) formed on sealing of the intermediate space (116) and is configured to supply a gas to the channel (106) for generating a gas flow (208, 302) in the channel (106).

4. Seal system (100, 200, 300) according to any one of the preceding claims, further comprising a gas extraction facility (212) which is coupled to the channel (106) formed on sealing of the intermediate space (116) and is configured to extract a gas from the channel (106) for generating a gas flow (208, 302) in the channel (106).

5. Seal system (100, 200, 300) according to claim 4, further comprising a powder circuit (404) which is coupled to the gas extraction facility (212) and/or the gas supply source (210) and is configured to return powder material (118), which is located in the gas extracted by the gas extraction facility (212) and/or in the gas pressed through the channel (106) by the gas supply source (210), to a powder depot (408) of the installation (400).

6. Seal system (100, 200, 300) according to any one of claims 3 to 5, wherein the seal system (100, 200, 300) is configured to generate the gas flow (208, 302) in the channel (106) in the event of an upward movement of the plate assembly (112) in the process chamber (410) and/or during the production of the three-dimensional workpiece by means of the additive layer manufacturing method.

7. Seal system (100, 200, 300) according to any one of the preceding claims, further comprising one or more pressure sensors (206a, 206b) which are configured to detect a pressure in the channel (106), wherein the seal system (100, 200, 300) is configured to reduce a pressure difference between the pressure in the channel (106) and an ambient pressure, in particular a pressure in the process chamber (410).

8. Seal system (100, 200, 300) according to claim 7, if dependent on one of claims 3 to 5, the gas supply source (210) and/or the gas extraction facility (212) being configured to reduce the pressure difference based on the pressure in the channel (106) and the ambient pressure.

9. Seal system (100, 200, 300) according to any one of claims 1 to 8, further comprising one or more excess pressure connections (202a, 202b) and one or more vacuum connections (204a, 204b) which are arranged such that, on formation of the channel (106), the excess pressure connections (202a, 202b) and the vacuum connections (204a, 204b) are coupled to the channel (106) such that excess pressure connections (202a, 202b) and vacuum connections (204a, 204b) alternate in the channel direction.

10. Seal system (100, 200, 300) according to claim 9, wherein the excess pressure connections (202a, 202b) and the vacuum connections (204a, 204b) are coupled, on formation of the channel (106), to the channel (106) such that spacings of respectively consecutive connections of the excess pressure connections (202a, 202b) and vacuum connections (204a, 204b) in the channel direction are of equal length.

11. Seal system (100, 200, 300) according to claim 9 or 10, further comprising one or more supply channels (214, 304, 306, 308) via which the one or more excess pressure connections (202a, 202b) and/or the one or more vacuum connections (204a, 204b) are coupled to the channel (106) formed on sealing of the intermediate space (116), wherein a cross section of one of the supply channels (214, 304, 306, 308) narrows before entry into an area between the first seal (102) and the second seal (104) and/or the supply channel (214, 304, 306, 308) fans out, in particular further comprising a processor (406) which is configured to adjust a gas flow in the channel (106) by means of the pressure sensors such that the pressure differences between channel and process chamber are minimised.

12. Seal system (100, 200, 300) according to any one of the preceding claims, wherein the first seal (102) comprises a more wear-resistant material than the second seal (104).

13. System (402) for an installation (400) for producing a three-dimensional workpiece by means of an additive layer manufacturing method, the system (402) comprising:
a seal system (100, 200, 300) according to any one of the preceding claims, and
a plate assembly (112) that is movable upwards and/or downwards and is coupled to the seal system (100, 200, 300).

14. Installation (400) for producing a three-dimensional workpiece by means of an additive layer manufacturing method, the installation (400) comprising:
a system (402) according to claim 13;
a process chamber (410) in which the system (402) is arranged;
a powder depot (408) for supplying powder material (118) to the process chamber (410) for producing the three-dimensional workpiece from the powder material (118) by means of the additive layer manufacturing method, wherein the powder depot (408) is coupled to the seal system (100, 200, 300) in order to supply powder material (118) extracted by the seal system (100, 200, 300) to the powder depot (408); and
an irradiation unit (412) for irradiating a powder layer distributed on the plate assembly (112) to produce the three-dimensional workpiece.

15. Installation (400) according to claim 14, further comprising one or more sensors (414) which are configured to detect a pressure in the process chamber (410) and/or in the environment of the installation (400).

## Revendications

1. Système d'étanchéité (100, 200, 300) pour une installation (400) de fabrication d'une pièce tridimensionnelle au moyen d'un procédé de construction générative par couches, le système d'étanchéité (100, 200, 300) comprenant :
un premier joint (102) configuré pour rendre étanche un espace intermédiaire (116) sur une première circonférence (108) entre une paroi intérieure de chambre de traitement (110) et un agencement de plaques de support de matériau en poudre (112) dans une chambre de traitement (410) de l'installation (400), et
un second joint (104) configuré pour rendre étanche l'espace intermédiaire (116) sur une seconde circonférence (114) entre la paroi intérieure de chambre de traitement (110) et l'agencement de plaques de support de matériau en poudre (112) dans la chambre de traitement (410) de l'installation (400),
dans lequel le premier joint (102) et le second joint (104) sont montés sur l'agencement de plaques (112) et dans lequel le premier joint (102) est espacé du second joint (104) pour former un canal (106) entre le premier joint (102) et le second joint (104) au niveau d'un bord du système d'étanchéité (110) lors de l'étan-chéification, par le premier joint (102) et le second joint (104), de l'espace intermédiaire (116) entre la paroi intérieure de chambre de traitement (110) et l'agencement de plaques (112), et
dans lequel le système d'étanchéité (100, 200, 300) est configuré pour créer un écoulement de gaz (208) dans le canal (106) dans une direction circonférentielle autour de l'agencement de plaques (112) et/ou sensiblement perpendiculairement à la direction circonférentielle du canal (106).

2. Système d'étanchéité (100, 200, 300) selon la revendication 1, dans lequel le bord du système d'étanchéité (100, 200, 300) comprend un bord périphérique du système d'étanchéité (100, 200, 300) sur lequel le canal (106) est formé lors de l'étanchéification de l'espace intermédiaire (116).

3. Système d'étanchéité (100, 200, 300) selon la revendication 1 ou 2, comprenant en outre une source d'amenée de gaz (210) qui est couplée au canal (106) formé lors de l'étanchéification de l'espace intermédiaire (116) et configurée pour amener un gaz au canal (106) afin de générer un écoulement de gaz (208, 302) dans le canal (106).

4. Système d'étanchéité (100, 200, 300) selon l'une des revendications précédentes, comprenant en outre une aspiration de gaz (212) qui est couplée au canal (106) formé lors de l'étanchéification de l'espace intermédiaire (116) et configurée pour aspirer un gaz du canal (106) afin de générer un écoulement de gaz (208, 302) dans le canal (106).

5. Système d'étanchéité (100, 200, 300) selon la revendication 4, comprenant en outre un circuit de poudre (404) qui est couplé à l'aspiration de gaz (212) et/ou à la source d'amenée de gaz (210) et configuré pour renvoyer dans un dépôt de poudre (408) de l'installation (400) le matériau en poudre (118) qui est présent dans le gaz aspiré par l'aspiration de gaz (212) et/ou dans le gaz refoulé à travers le canal (106) par la source d'amenée de gaz (210).

6. Système d'étanchéité (100, 200, 300) selon l'une des revendications 3 à 5, dans lequel le système d'étanchéité (100, 200, 300) est configuré pour générer l'écoulement de gaz (208, 302) dans le canal (106) lors d'un mouvement ascendant de l'agencement de plaques (112) dans la chambre de traitement (410) et/ou pendant la fabrication de la pièce tridimensionnelle au moyen du procédé de construction générative par couches.

7. Système d'étanchéité (100, 200, 300) selon l'une des revendications précédentes, comprenant en outre un ou plusieurs capteurs de pression (206a, 206b) qui sont configurés pour détecter une pression dans le canal (106), dans lequel le système d'étanchéité (100, 200, 300) est configuré pour réduire une différence de pression entre la pression dans le canal (106) et une pression ambiante, en particulier une pression dans la chambre de traitement (410).

8. Système d'étanchéité (100, 200, 300) selon la revendication 7, si elle dépend de l'une des revendications 3 à 5, dans lequel la source d'amenée de gaz (210) et/ou l'aspiration de gaz (212) sont configurées pour réduire la différence de pression sur la base de la pression dans le canal (106) et de la pression ambiante.

9. Système d'étanchéité (100, 200, 300) selon l'une des revendications 1 à 8, comprenant en outre un ou plusieurs raccords de surpression (202a, 202b) et un ou plusieurs raccords de dépression (204a, 204b) qui sont agencés de manière à ce que, lors de la formation du canal (106), les raccords de surpression (202a, 202b) et les raccords de dépression (204a, 204b) soient couplés avec le canal (106) de telle sorte que les raccords de surpression (202a, 202b) et les raccords de dépression (204a, 204b) alternent dans la direction du canal.

10. Système d'étanchéité (100, 200, 300) selon la revendication 9, dans lequel, lors de la formation du canal (106), les raccords de surpression (202a, 202b) et les raccords de dépression (204a, 204b) sont couplés au canal (106) de telle sorte que les distances dans la direction du canal de chacun des raccords successifs des raccords de surpression (202a, 202b) et des raccords de dépression (204a, 204b) soient de la même longueur.

11. Système d'étanchéité (100, 200, 300) selon la revendication 9 ou 10, comprenant en outre un ou plusieurs canaux d'alimentation (214, 304, 306, 308) par lesquels lesdits un ou plusieurs raccords de surpression (202a, 202b) et/ou lesdits un ou plusieurs raccords de dépression (204a, 204b) sont couplés au canal (106) formé lors de l'étanchéification de l'espace intermédiaire (116), dans lequel une section transversale de l'un des canaux d'alimentation (214, 304, 306, 308) se rétrécit avant une entrée dans une zone entre le premier joint (102) et le second joint (104) et/ou le canal d'amenée (214, 304, 306, 308) se déploie en éventail, en particulier comprenant en outre un processeur (406) qui est configuré pour réguler, au moyen des capteurs de pression, un écoulement de gaz dans le canal (106) de manière à minimiser les différences de pression entre le canal et la chambre de traitement.

12. Système d'étanchéité (100, 200, 300) selon l'une des revendications précédentes, dans lequel le premier joint (102) comprend un matériau plus résistant à l'usure que le second joint (104).

13. Système (402) pour une installation (400) de fabrication d'une pièce tridimensionnelle au moyen d'un procédé de construction générative par couches, le système (402) comprenant :
un système d'étanchéité (100, 200, 300) selon l'une des revendications précédentes, et
un agencement de plaques (112) mobile vers le haut et/ou vers le bas, couplé au système d'étanchéité (100, 200, 300).

14. Installation (400) de fabrication d'une pièce tridimensionnelle au moyen d'un procédé de construction générative par couches, l'installation (400) comprenant :
un système (402) selon la revendication 13 ;
une chambre de traitement (410) dans laquelle est disposé le système (402) ;
un dépôt de poudre (408) pour amener du matériau en poudre (118) à la chambre de traitement (410) afin de fabriquer la pièce tridimensionnelle à partir du matériau en poudre (118) au moyen du procédé de construction générative par couches, le dépôt de poudre (408) étant couplé au système d'étanchéité (100, 200, 300) pour ramener le matériau en poudre (118) aspiré par le système d'étanchéité (100, 200, 300) au dépôt de poudre (408) ; et
une unité d'irradiation (412) pour irradier une couche de poudre répartie sur l'agencement de plaques (112) afin de fabriquer la pièce tridimensionnelle.

15. Installation (400) selon la revendication 14, comprenant en outre un ou plusieurs capteurs (414) qui sont configurés pour détecter une pression dans la chambre de traitement (410) et/ou dans l'environnement de l'installation (400).
